Europäisches Patentamt

European Patent Office

Office européen des brevets

(11) Publication number: **0 551 002 A1**

## EUROPEAN PATENT APPLICATION

(21) Application number: 92311734.5

(22) Date of filing: 23.12.92

(51) Int. Cl.5: **B01J 47/02**, B01D 15/04, C02F 1/42

(30) Priority: **10.01.92 GB 9200480**
       **14.08.92 GB 9217348**

(43) Date of publication of application:
       **14.07.93 Bulletin 93/28**

(84) Designated Contracting States:
       **AT BE CH DE DK ES FR GB GR IE IT LI LU NL PT SE**

(71) Applicant: **ROHM AND HAAS COMPANY**
       **Independence Mall West**
       **Philadelphia Pennsylvania 19105(US)**

(72) Inventor: **Cuvelier, Jean Marie Henri**
       **6 Rue des Pensees**
       **F-77330 Ozoir la Ferriere(FR)**

(74) Representative: **Tanner, James Percival et al**
       **ROHM AND HAAS (UK) LTD. European**
       **Operations Patent Department Lennig House**
       **2 Mason's Avenue**
       **Croydon CR9 3NB (GB)**

(54) Ion exchange resin columns, systems comprising such colums, and processes using such columns.

(57) There is provided a column for use in an ion exchange process which prevents, or minimises, the fouling of ion exchange resin beds used therein with unwanted particulate material. The column comprises an inlet for fluid to be treated, an outlet for treated fluid, a section for ion exchange resin, and a section for inert, particulate filter material with the latter being located between the section for ion exchange resin and the inlet for fluid to be treated such that the section for inert, particulate filter material is closer to said inlet than any section for ion exchange resin.

The present invention is concerned with ion exchange resin columns for use in ion exchange resin systems. More particularly, the present invention is concerned with ion exchange resin columns which prevent, or minimize, the fouling of ion exchange resin beds used therein with unwanted particulate material.

Ion exchange resin systems typically comprise at least one column containing an ion exchange resin bed. The ion exchange resin is typically located, within the column, between two plates, each plate having a plurality of orifices or nozzles therein. In use, the fluid to be treated (i.e. the fluid to be treated in the loading cycle of operation of the column) is introduced into the column at one end thereof, passes through the orifices or nozzles in one of the plates, passes through the ion exchange resin bed, passes through the orifices or nozzles in the other of the plates, and exits the column at the other end thereof.

The fluid to be treated in an ion exchange resin column may, for example, contain suspended matter and, on passage of the fluid to be treated through the ion exchange resin column, this suspended matter may be retained within the ion exchange resin bed, thereby eventually fouling the resin bed. Further, the suspended particulate matter may result in blocking of the orifices or nozzles in the plates typically located at either end of the ion exchange resin bed.

In ion exchange resin systems comprising a plurality of ion exchange resin columns it is possible, in the operation of the system in the loading cycle, for resin fines, for example broken resin beads or very small particle-size resin beads, from the ion exchange resin located in one of the columns, to pass through the orifices or nozzles of the plate located at the exit end of that column and to pass into the next column located downstream. In such a case, the resin fines may result in contamination of the ion exchange resin in the column located downstream, and may even result in blocking of the orifices or nozzles in any plates located downstream of the ion exchange resin bed from which the resin fines originate.

Clearly, it would be desirable if suspended matter, located in the fluid to be treated in an ion exchange resin system, could be removed or at least minimized. It would also be desirable if the fouling of the orifices or nozzles of any plates located within an ion exchange resin column, and the fouling of the ion exchange resin in such column, by ion exchange resin fines from an upstream ion exchange column and/or suspended matter present in the fluid to be treated, could be avoided, or at least minimized.

It is known to filter suspended material from a fluid to be treated in an ion exchange resin system by passing the fluid to be treated through a bed of filter material such as sand, gravel or charcoal, the bed of filter material being located in a separate container upstream of the ion exchange resin column(s). However, the use of such a filter material bed has a number of disadvantages. For example, the location of the filter material bed within a separate container has the disadvantages that it increases the equipment requirements of the ion exchange resin system and, therefore, increases the cost of the system. Also, when the filter material bed becomes fouled with entrapped suspended material removed from the fluid flowing therethrough, it is cleared by backwashing, for example, with water. This backwashing has the disadvantage that it adds a further step to the operation of the ion exchange resin system and necessitates the shutting down of the ion exchange process whilst it is carried out.

It is also known to have strainers or filters, for example paper or fabric filters, located between adjacent ion exchange resin columns of an ion exchange resin system comprising two or more such columns, the purpose of the filter being to prevent the passage of ion exchange resin fines from the column(s) located upstream of the filter to the column(s) located downstream of the filter. However, the use of such strainers or filters has a number of disadvantages. For example, as in the case of the above-described known filter material beds for removing suspended material, the strainers and filters are housed within a separate container and this adds both to the complexity and cost of the overall ion exchange resin system. Also, the use of the strainers and filters has the disadvantage that, when they become fouled, for example with ion exchange resin fines, it is necessary to shut down the ion exchange resin process to allow the cleaning or replacement of the fouled strainers and filters.

We have now surprisingly found a column, for use in ion exchange resin systems and processes, which overcomes the disadvantages of the above-described known filtration devices, and which enables (a) suspended matter, present in a fluid to be treated in an ion exchange resin system to be removed, or the level thereof to be at least minimized, and (b) the passage of resin fines from one ion exchange resin bed of an ion exchange resin system, comprising two or more such beds, to the next, downstream ion exchange resin bed to be avoided, or to be at least minimized.

According to the present invention there is provided a column for use in an ion exchange process, which comprises an inlet for fluid to be treated in the loading cycle of the ion exchange process, an outlet for fluid treated in the loading cycle of the ion exchange process, a section for ion exchange resin, and a section for inert, particulate filter material, said section for inert, particulate filter material being located between said section for ion exchange resin and said inlet such that said section for inert, particulate filter material is closer to said inlet than any section for ion exchange resin.

The present invention also provides a column according to the invention when charged with a bed of ion exchange resin and a bed of inert, particulate filter material.

The present invention further provides an ion exchange resin system, which comprises one column, or a plurality of columns, according to the invention.

The present invention still further provides an ion exchange resin process, which comprises passing fluid to be treated through an ion exchange resin system comprising one column, or a plurality of columns, according to the invention, said column(s) being charged with a bed of ion exchange resin and a bed of inert, particulate filter material.

As used herein, in connection with the present invention:

(i) the terms "upstream" and "downstream" refer to the normal loading cycle of operation of an ion exchange resin column/system;

(ii) references to the treatment of a fluid are references to the treatment of the fluid in the normal loading cycle of operation of the column/system; and

(iii) the term "inert", when used in connection with the particulate filter material, is intended to mean that the material is inert to the materials with which it comes into contact during operation of the ion exchange resin column/system, i.e. during the loading and regeneration cycles of the column/system. The materials with which the inert, particulate filter material may come into contact during operation of the ion exchange resin column/system include, but are not limited to, the fluid to be treated in the column/system, the regenerant materials and ion exchange resins.

In the column according to the present invention, retaining means which allows the passage of fluid therethrough may, for example, be located at one or more of the following positions:-

(i) the end of the section for inert, particulate filter material closest to the inlet for fluid to be treated;

(ii) the end of the section for inert, particulate filter material remote from the inlet for fluid to be treated;

(iii) the end of the section for ion exchange resin closest to the outlet for treated fluid; or

(iv) the end of the section for ion exchange resin remote from the outlet for treated fluid.

In the above retaining means (ii) and (iii) may be integral, i.e. are one and the same retaining means.

For example, in the column according to the present invention the section for inert, particulate filter material may be defined as the volume between a first retaining means located at the upstream end of said section, and a second retaining means located at the downstream end of said section, and wherein the first and second retaining means allow the passage of fluid therethrough, i.e. allow the passage therethrough of fluid to be treated in an ion exchange process and regenerant fluid. Similarly, in the column according to the present invention the section for ion exchange resin may, for example, be defined as the volume between a third retaining means located at the upstream end of said section and a fourth retaining means located at the downstream end of said section, and wherein the third and fourth retaining means allow the passage of fluid therethrough, i.e. allow the passage therethrough of fluid to be treated in an ion exchange process and regenerant fluid. Preferably, in the column according to the present invention the second and third retaining means are integral, i.e. are one and the same retaining means. In this preferred embodiment, therefore, the sections for inert, particulate filter material and ion exchange resin are defined by three retaining means, one retaining means being located at the upstream end of the section for inert, particulate filter material, one retaining means being located at the downstream end of the section for ion exchange resin, and the third retaining means being located between the section for inert, particulate filter material and the section for ion exchange resin.

In an alternative embodiment of the column according to the present invention no retaining means is present between the section for the inert, particulate filter material and the section for the ion exchange resin. In this embodiment, the hydraulic densities of the inert, particulate filter material and the ion exchange resin should be such that, upon fluidization of the inert filter material and ion exchange resin and allowing said filter material and resin to settle with no flow of fluid through the column, the inert filter material and ion exchange resin form separate beds with the inert filter material bed being located closer to the inlet (i.e. the inlet for fluid to be treated) end of the column than the ion exchange resin bed. Further, in this embodiment retaining means may, optionally, be located at the end of the section for inert, particulate filter material closest to the inlet for fluid to be treated, at the end of the section for ion exchange resin closest to the outlet for treated fluid, or both.

The retaining means are preferably in the form of plates having a plurality of orifices or nozzles therein.

Preferably, when the column according to the present invention is charged with inert, particulate filter material, the volume of such filter material is less than the volume of the section within which it is located. This is advantageous as it enables a fluidized bed of the filter material to be formed during the ion exchange resin regeneration cycle and this increases the efficiency in removal of entrapped particulate material from the filter material and, hence, increases the efficiency of cleaning of the filter material for further use. This formation of a fluidized bed of the inert, particulate filter material will be discussed in more detail hereinafter.

The ion exchange resin column and ion exchange resin system of the present invention may be arranged for upflow loading and downflow regeneration, or for downflow loading and upflow regeneration. Ion exchange resin systems arranged for upflow loading and downflow regeneration are, for example, disclosed in our EP-B-0142359. If the column according to the present invention is arranged for upflow loading and downflow regeneration (i.e. the section for inert, particulate filter material is located below the section for ion exchange resin), and the volume occupied by such filter material is less than that of the section within which it is located, then it is preferable for the filter material to have a specific gravity less than that of the fluid to be treated by ion exchange, and also less than that of the regenerant fluid, as this gives rise to several advantages. Firstly, during the normal fluid treatment cycle of operation of the column, the use of a filter material having a specific gravity less than that of the fluid passing therethrough results in the filter material being located, as a compacted bed, at the downstream end of the section within which it is located. This formation of a compacted bed enables efficient removal of particulate material from the fluid passing therethrough to be achieved. Secondly, during the regeneration cycle, the downward flow of the regenerant fluid will result in fluidization of the filter material bed and this, in turn, enables efficient removal of entrapped particulate material therefrom to be achieved.

Alternatively, if the column according to the present invention is arranged for downflow loading and upflow regeneration (i.e. the section for inert, particulate filter material is located above the section for ion exchange resin), and the volume occupied by such filter material is less than that of the section within which it is located, then it is preferable for the filter material to have a specific gravity greater than that of the fluid to be treated by ion exchange and also greater than that of the regenerant fluid, as this gives rise to advantages. Firstly, during the normal fluid treatment cycle of operation of the column, the use of a filter material having a specific gravity greater than that of the fluid passing therethrough results in the formation of a compacted bed of the filter material at the downstream end of the section within which it is located. As already discussed, the formation of a compacted bed of the filter material in the normal treatment cycle of operation of the column enables efficient removal of particulate material from the fluid passing therethrough to be achieved. Secondly, during the regeneration cycle, the upward flow of the regenerant fluid will result in the bed of filter material being fluidized and, as already discussed above, such fluidization enables efficient removal of entrapped particulate material and, hence, efficient cleaning of the filter material for reuse.

A further advantage of the column according to the present invention is that, as there is no section for ion exchange resin located between the inert, particulate filter material section and the inlet for fluid to be treated in the loading cycle of operation of the column, any entrapped particulate material removed from the inert filter material during the regeneration cycle of operation can be readily removed from the column, or any system of which the column forms a part, without contaminating the ion exchange resin of the column-(s)/system.

In one embodiment of the ion exchange resin system according to the present invention the system comprises a single ion exchange resin column. In such a situation, the column will be a column according to the invention and the inert, particulate filter material will enable suspended matter, present in the fluid to be treated in the system, to be removed, or the level thereof to be at least to be minimized, prior to passage of the fluid through the ion exchange resin located within the column.

In an alternative embodiment of the ion exchange resin system according to the present invention, the system comprises two or more ion exchange resin columns located in series. In such a situation, one or more of the ion exchange resin columns may be a column according to the present invention. For example, the first ion exchange resin column may be a column according to the invention, in which case the inert, particulate filter material will remove, or at least minimize, the level of suspended matter present in the fluid to be treated in the system. Alternatively, one or more of the columns located downstream of the first ion exchange resin column (i.e. the column farthest upstream) is a column according to the present invention, in which case the inert, particulate filter material will enable any resin fines, passing out of the column(s) upstream of such filter material, to be removed, or the level thereof at least to be minimized, and thereby prevent such resin fines from entering ion exchange resin beds located downstream of such inert particulate filter material and fouling such ion exchange resin beds and/or the retaining means (e.g. the orifices or nozzles in the plates) which may be present downstream of such inert filter material.

Of course, it is also possible, in an ion exchange resin system comprising two or more ion exchange resin columns, for both the first ion exchange resin column (i.e. the column farthest upstream), and one or more of the ion exchange resin columns located downstream of said first column, to be columns according

4

to the present invention.

In ion exchange resin systems, it is common for an ion exchange resin column, containing a bed of anion exchange resin, to be located downstream of an ion exchange resin column, containing a bed of cation exchange resin. In such a case, the location of a bed of inert, particulate filter material between the cation ion exchange resin bed and the anion exchange resin bed (i.e. in the column containing the anion exchange resin) will enable cation exchange resin fines to be removed from, or the level thereof to be at least minimized in, the fluid entering the anion exchange resin column. This will thereby prevent, or minimize, the fouling of the anion exchange resin bed with the cation exchange resin fines which would otherwise result in deterioration in the quality of the treated fluid, for example water, and give rise to rinse difficulties after each regeneration, and will also avoid, or at least minimize, the blocking of the retaining means (e.g. blocking of the orifices or nozzles of the plate) which may be present at the inlet side of the anion exchange resin bed. Similarly, ion exchange resin systems are known in which an ion exchange resin column, containing a bed of cation exchange resin, is located downstream of an ion exchange resin column, containing a bed of anion exchange resin. In such a situation, the presence of a bed of an inert, particulate filter material between the anion and cation exchange resin beds (i.e. in the column containing the cation exchange resin) will enable anion exchange resin fines to be removed from, or the level thereof at least to be minimized in, the fluid passing from the anion exchange resin bed to the cation exchange resin bed. This will enable fouling of the cation exchange resin, and also blockage of the retaining means (e.g. blockage of the orifices or nozzles in the plate) which may be present at the inlet end of the cation exchange resin column, to be avoided or at least minimized.

Preferably, the inert filter material is a synthetic material, for example high density polyethylene, polypropylene, polyamide or polystyrene. Preferably, the inert, particulate filter material is high density polyethylene, polypropylene or polyamide. The particle size of the inert filter material may, for example, be from about 0.1 mm to about 5 mm. In one embodiment of the invention, the inert, particulate filter material preferably has a particle size of from about 0.2 mm to about 4 mm, more preferably from about 0.3 mm to about 2 mm. In another embodiment of the invention, the inert filter material preferably has a particle size of from about 0.5 mm to about 5 mm, and more preferably from about 0.5 mm to about 1.7 mm. When referring to a particle size, we mean the diameter of the particles in the case of spherical particles, and the minimum and maximum diameters in the case of non-spherical particles. It has been found that the use of inert filter material having a particle size in the range of about 0.5 mm to about 1.7 mm is efficient in removing, from a fluid passing therethrough, particulate material having a particle size of about 0.05 to about 0.4 mm. Preferably, the particle size of the inert filter material is smaller than that of the ion exchange resin.

The depth of the inert filter material in the column according to the present invention is preferably about 10 to about 50 cm.

In operation of an ion exchange resin system, flow rates, through the ion exchange resin beds, of the fluid to be treated of about 10 to about 80 metres per hour are commonly used. It has been found that the use of an inert filter material, in accordance with the present invention, is efficient, at such flow rates through the inert filter material, in removing particulate material from the fluid to be treated in the system.

During the regeneration cycle of the ion exchange resin system, the regenerant fluid will remove, from the inert filter material, any entrapped particulate material which has been removed from the fluid passing through the system during the loading cycle. As already discussed, during the regeneration cycle, the inert filter material is preferably fluidized, such fluidization improving the efficiency of removal of any entrapped particulate material.

Loading times, for the ion exchange resin system, of up to 8 hours, or more, are not uncommon. For example, ion exchange resin systems may be run in their loading cycle for many days before requiring regeneration. It has been found that the inert material is efficient in removing particulate material, from the fluid passing through the ion exchange resin system during the loading cycle, even during such long loading periods.

The following Examples are present to illustrate preferred embodiments of the present invention.

In the Examples reference will be made to the accompanying drawings, in which:-

Figure 1 is a graph illustrating the migration, versus time, of broken cation exchange resin beads through the inert, particulate material beds used in Example 1;

Figure 2 is a bar graph illustrating migration, at various fluid flow rates, of broken cation exchange resin beads through the inert, particulate material beds used in Example 2;

Figure 3 is a graph illustrating the migration, at various fluid flow rates, of broken cation exchange resin beads through the inert, particulate material beds used in Example 3; and

Figure 4 is a graph illustrating the migration, versus time, of the broken cation exchange resin beads through the inert, particulate material bed of Example 4.

EXAMPLES

EXAMPLE 1:

This Example is presented to show the ability of a bed of inert particulate filter material to remove resin fines from water.

The apparatus used in this Example comprised a column containing a bed of inert, particulate filter material, the bed of inert filter material having a height of 10 cm and the inert filter material being as stated in Table 1 below. The volume of the column was greater than the volume of the bed of inert filter material. The base of the column had an inlet for fluid, and the top of the column had an outlet for fluid.

Water, containing broken cation exchange resin beads having a particle size of from 0.1 to 0.2 mm, was introduced into the column through the inlet at the base thereof. The fluid passed through the bed of inert material and exited the column through the outlet at the top thereof. The flow rate of fluid through the bed of inert material was from 20 to 40 metres per hour.

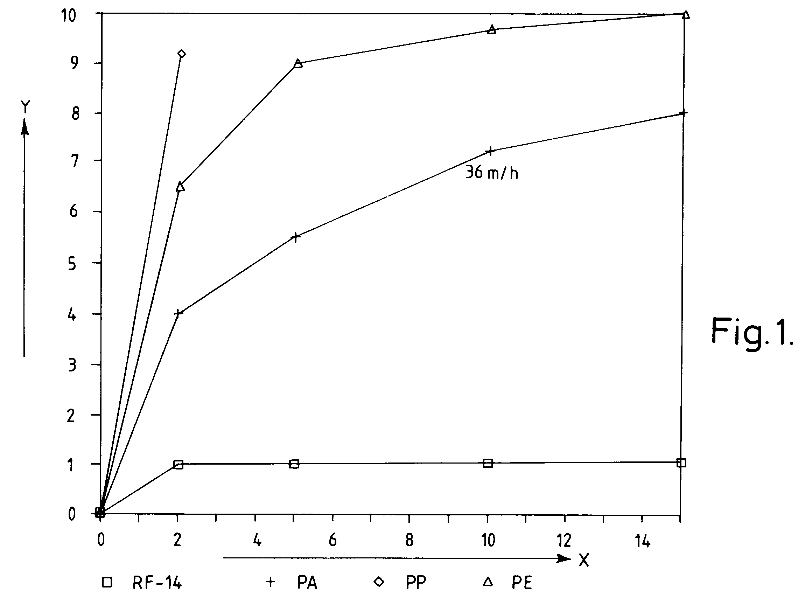

This procedure was carried out using the various inert materials listed in Table 1 below, and the height at which the broken cation exchange resin beads were found within the bed of inert filter material was measured at varying times and the results are illustrated in Figure 1 of the accompanying drawings. In Figure 1, axis X represents the time (minutes) and axis Y represents the height (cm) at which the broken cation exchange resin beads were found within the bed of inert filter material (i.e. the level of migration of the broken beads).

From Figure 1 it can be seen that, after a certain time, an equilibrium is reached where the resin fragments do not migrate any further. This indicates that the resin fragments form a "cake" which inhibits further migration of the fragments through the bed of inert filter material.

After passage of the water, containing broken cation exchange resin beads, through the bed of inert filter material, fresh water was passed downwardly through the column at a flow rate of from 1 to 10 metres per hour. This simulates downflow regeneration in an ion exchange resin column. During passage of the water downwardly through the column, fluidization of the bed of inert filter material was noted and this aided removal of the cation exchange resin fragments from the bed of inert material.

Table 1

| | Polyethylene (PE) | Polypropylene (PP) | Polyamide (PA) | Amberlite RF-14* |
|---|---|---|---|---|
| density (g/ml) | 0.94 - 0.96 | 0.96 - 0.91 | 1.09 - 1.16 | 0.95 - 0.98 |
| average size (cm): | | | | |
| diam. | 0.3 | 0.5 | 0.3 | 0.1 |
| length | 0.3 | 0.5 | 0.3 | 0.17 |
| width | | 0.2 | | |

* Amberlite RF-14 is a polypropylene material marketed by Rohm and Haas Company

EXAMPLE 2:

The procedure of Example 1 was repeated except that the migration of the broken cation exchange resin beads, as a function of the inert filter material utilized at various flow rates, was measured.

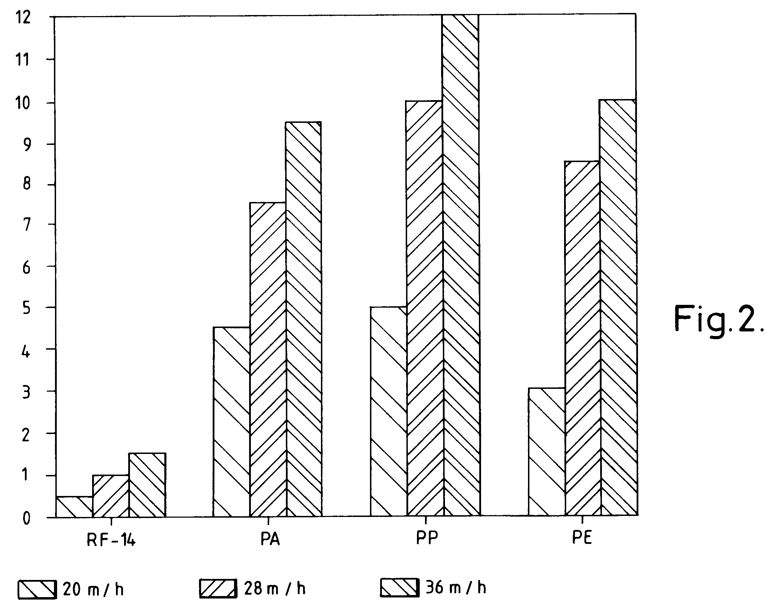

The results of this Example are given in Figure 2 of the accompanying drawings. In Figure 2, the inert filter materials are shown along the horizontal axis and the height (cm), after 15 minutes, at which the broken cation exchange resin beads were found within the bed of inert filter material is shown by the vertical axis (i.e. the level of migration of the broken beads).

EXAMPLE 3:

The procedure of Example 1 was repeated except that the migration of the broken cation exchange resin beads, as a function of the particle size of the inert filter material bed at various flow rates (i.e. 20 m/hr, 28 m/hr and 36 m/hr), was measured. The cation exchange resin bead fragments had a particle size of from 0.3 to 0.4 mm.

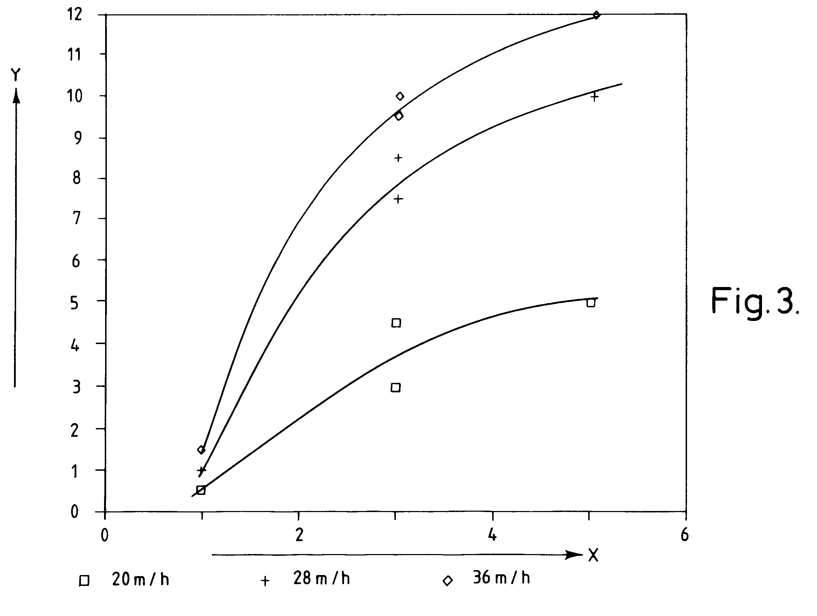

The results of this Example are illustrated in Figure 3 of the accompanying drawings. In Figure 3, the X axis represents the particle size (mm) of the inert filter material, and axis Y represents the height (cm) at which the broken cation exchange resin beads were found within the bed of inert filter material after 15 minutes (i.e. the level of migration of the broken beads). The values shown for inert material having an average particle size of 1 mm were obtained using the Amberlite RF-14, the values shown for inert material having an average particle size of 3 mm were obtained using the polyethylene, and the values shown for inert material having an average particle size of 5 mm were obtained using the polypropylene.

From Figure 3, it can be seen that there is a correlation between the migration of the cation exchange resin bead fragments and the particle size of the inert filter material. For example, it was found that, for the fragment size utilized (i.e. 0.3 to 0.4 mm), the most efficient inert filter material particle size is approximately 1 mm.

EXAMPLE 4:

Example 3 was repeated using Amberlite RF-14 particulate material as the inert filter material and utilizing cation exchange resin bead fragments having a particle size of 0.1 to 0.2 mm. The Amberlite RF-14 material had a particle size of approximately 1 mm.

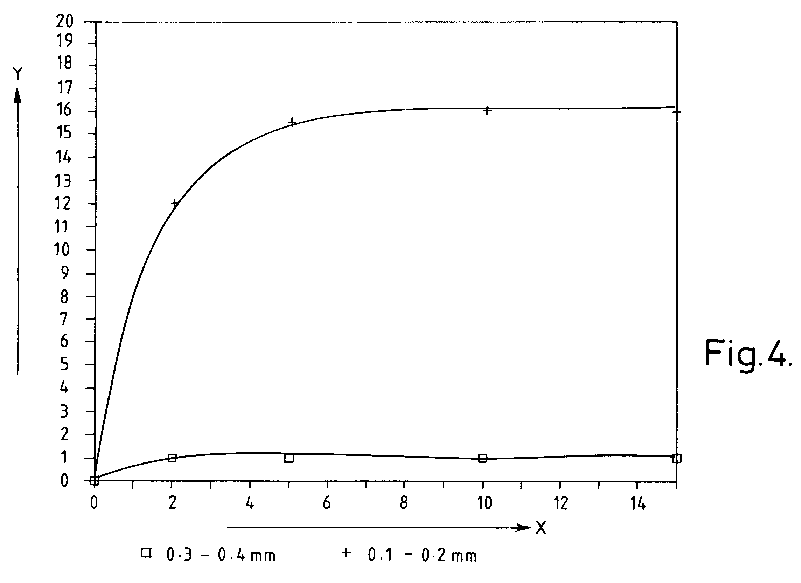

The results obtained for this Example were compared with the results obtained in Example 3 for the same inert filter material, and the results are given in Figure 4 of the accompanying drawings. In Figure 4, axis X represents the time (minutes) and axis Y represents the height (cm) at which the broken cation exchange resin beads were found within the bed of inert filter material (i.e. the level of migration of the broken beads).

From Figure 4 it can be seen that the inert filter material (Amberlite RF-14) having a particle size of approximately 1 mm) is less efficient in removing the cation exchange resin bead fragments having a particle size of from 0.1 to 0.2 mm than in removing the cation exchange resin bead fragments having a particle size of from 0.3 to 0.4 mm.

EXAMPLE 5:

The apparatus used in this Example comprised a column having a cross-section of 3.14 $cm^2$ and containing a bed of inert, particulate filter material (polystyrene) having an average particle size of 300 micrometres, a density of 1.06 g/ml, and a uniformity coefficient of 1.2. The bed of inert, particulate filter material had a depth of 10 cm.

1 ml of strong acid cation exchange resin fragments, having a particle size of between 46 and 150 micrometres, were then placed on top of the inert, particulate filter material bed. The resin fragments were produced by grinding a strong acid cation exchange resin and screening the resulting particles between 46 and 150 micrometres.

Water was then passed downwardly through the column at a flow rate of 20 m/hr and the distance travelled by the resin fragments through the inert, particulate filter material bed was measured at certain time intervals.

The above experimental procedure was repeated except that the flow rate of the water through the column was 40 m/hr.

The results obtained from the above experimental procedures were as follows:-

| Flow rate: 20 m/hr: | |
|---|---|
| Time (mins) | Distance (cm)** |
| 0 | 0 |
| 10 | 0.5 |
| 30 | 0.5 |
| 120 | 0.5 |

** Distance travelled by the resin fragments downwardly through the bed of inert, particulate filter material.

| Flow rate: 40 m/hr: | |
|---|---|
| Time (mins) | Distance (cm)** |
| 0 | 0 |
| 10 | 0.5 |
| 30 | 0.6 |
| 120 | 0.6 |

** Distance travelled by the resin fragments downwardly through the bed of inert, particulate filter material.

Following each of the above experimental procedures, the flow direction of water through the column was reversed (i.e. water was passed upwardly through the column and, hence, through the bed of inert, particulate filter material). The flow rate of the water was 10 m/hr and it was observed that more than 95% by volume of the resin fragments were washed out of the inert filter material bed and removed from the column.

From this Example, it can be seen that inert material having an average particle size of 300 micrometres is able to efficiently retain resin fragments of 46 to 150 micrometres size but is able to release the resin fragments when the flow of water is reversed.

**Claims**

1. A column for use in an ion exchange process, which comprises an inlet for fluid to be treated in the loading cycle of the ion exchange process, an outlet for fluid treated in loading cycle of the ion exchange process, a section for ion exchange resin, and a section for inert, particulate filter material, said section for inert, particulate filter material being located between said section for ion exchange resin and said inlet such that said section for inert, particulate filter material is closer to said inlet than any section for ion exchange resin.

2. A column as claim in claim 1, wherein retaining means, which allows the passage of fluid therethrough, is located at one or more of the following positions:-
   (i) the end of the section for inert, particulate filter material closest to the inlet for fluid to be treated;
   (ii) the end of the section for inert, particulate filter material remote from the inlet for fluid to be treated;
   (iii) the end of the section for ion exchange resin closest to the outlet for treated fluid; or
   (iv) the end of the section for ion exchange resin remote from the outlet for treated fluid.

3. A column as claimed in claim 2, wherein retaining means (ii) and (iii) are integral.

4. A column as claimed in claim 2 or claim 3, wherein the or each retaining means is in the form of a plate having a plurality of orifices or nozzles therein.

5. A column as claimed in any of claims 1 to 4, in which the section for ion exchange resin is charged with a bed of ion exchange resin, and the section for inert, particulate filter material is charged with a bed of inert, particulate filter material.

6. A column as claimed in claim 5, wherein the volume of the inert, particulate filter material is less than the volume of the section within which it is located.

7. A column as claimed in claim 5 or claim 6, wherein the inert, particulate filter material is high density polyethylene, polypropylene, polystyrene or polyamide.

8. A column as claimed in any of claims 5 to 7, wherein the inert, particulate filter material has a particle size of from about 0.1 mm to about 5 mm.

9. A column as claimed in claim 8, wherein the inert, particulate filter material has a particle size of from about 0.2 mm to about 4 mm.

10. A column as claimed in claim 8, wherein the inert, particulate filter material has a particle size of from about 0.5 mm to about 1.7 mm.

11. A column as claimed in any of claims 5 to 10, wherein the bed of inert, particulate filter material has a depth of from about 10 cm to about 50 cm.

12. An ion exchange resin column as claimed in any of claims 5 to 11, wherein no retaining means is present between the section for the ion exchange resin and the section for the inert, particulate filter material, and the hydraulic densities of the ion exchange resin and the inert, particulate filter material are such that, upon fluidisation of these materials in the column and allowing them to settle with no flow of fluid through the column, they form separate beds with the latter being located closer than the former to the inlet for fluid to be treated.

13. An ion exchange resin system, which comprises one column, or a plurality of columns, as claimed in any of claims 1 to 12.

14. An ion exchange resin system as claimed in claim 13, which comprises two or more ion exchange resin columns with one or more of such columns being a column as claimed in any of claims 1 to 11.

15. An ion exchange resin process, which comprises passing fluid to be treated through an ion exchange resin system comprising one column, or a plurality of columns, as claimed in any of claims 5 to 12.

16. An ion exchange resin process as claimed in claim 15, wherein:
   (a) the column(s), as claimed in any of claims 5 to 11, are arranged for upflow loading and downflow regeneration;
   (b) the volume of the inert, particulate filter material is less than the volume of the section within which it is located; and
   (c) the density of the inert, particulate filter material is less than that of the fluid to be treated.

17. An ion exchange resin process as claimed in claim 15, wherein:
   (a) the column(s), as claimed in any of claims 5 to 11, are arranged for downflow loading and upflow regeneration;
   (b) the volume of the inert, particulate filter material is less than the volume of the section within which it is located; and
   (c) the density of the inert, particulate filter material is greater than that of the fluid to be treated.

18. An ion exchange process as claimed in any of claims 15 to 17, wherein the flow rate of the fluid to be treated is from about 10 to about 80 metres per hour.

Fig.1.

EP 0 551 002 A1

Fig.2.

20 m / h    28 m / h    36 m / h

EP 0 551 002 A1

Fig. 3.

Fig.4.

EP 0 551 002 A1

| DOCUMENTS CONSIDERED TO BE RELEVANT | | | EP 92311734.5 | |
|---|---|---|---|---|
| Category | Citation of document with indication, where appropriate, of relevant passages | | Relevant to claim | CLASSIFICATION OF THE APPLICATION (Int. Cl.5) |
| X | ULLMANNS ENZYKLOPÄDIE DER TECHNISCHEN CHEMIE, 4th edition, no. 13, Verlag Chemie, Weinheim 1977, pages 326,327 * Part 7.5.3 * | | 1-7, 12-16 | B 01 J 47/02 B 01 D 15/04 C 02 F  1/42 |
| X | EP - A - 0 452 042 (THE PERMUTTIT COMPANY LIMITED) * Column 3, line 2 - column 5, line 37; claims; fig. 1,2 * | | 1-6, 11-15, 17 | |
| D,A | EP - A - 0 142 359 (ROHM AND HAAS COMPANY) * Examples; claims * | | 1-17 | |
| | | | | TECHNICAL FIELDS SEARCHED (Int. Cl.5) |
| | | | | B 01 J B 01 D C 02 F |

The present search report has been drawn up for all claims

| Place of search | Date of completion of the search | Examiner |
|---|---|---|
| VIENNA | 16-04-1993 | TENGLER |

EPO FORM 1503 03.82 (P0401)